(19) **Europäisches Patentamt / European Patent Office / Office européen des brevets**

(11) **EP 1 917 756 B1**

(12) **FASCICULE DE BREVET EUROPEEN**

(45) Date de publication et mention de la délivrance du brevet:
**08.04.2009 Bulletin 2009/15**

(21) Numéro de dépôt: **06808056.3**

(22) Date de dépôt: **25.08.2006**

(51) Int Cl.:
***H04L 9/08*** *(2006.01)*

(86) Numéro de dépôt international:
**PCT/FR2006/001989**

(87) Numéro de publication internationale:
**WO 2007/023231 (01.03.2007 Gazette 2007/09)**

(54) **PROCEDE D'ETABLISSEMENT D'UNE CLE DE SESSION ET UNITES POUR LA MISE EN OEUVRE DU PROCEDE**

VERFAHREN ZUR ERSTELLUNG EINES SITZUNGSSCHLÜSSELS UND EINHEITEN ZUR UMSETZUNG DIESES VERFAHRENS

METHOD OF ESTABLISHING A SESSION KEY AND UNITS FOR IMPLEMENTING SAID METHOD

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **26.08.2005 FR 0508782**

(43) Date de publication de la demande:
**07.05.2008 Bulletin 2008/19**

(73) Titulaire: **Viaccess**
**92057 Paris La Defense (FR)**

(72) Inventeurs:
- **VIGARIE, Jean-Pierre**
  **F-35510 Cesson-Sevigne (FR)**
- **FEVRIER, Pierre**
  **F-35250 Saint Sulpice la Forêt (FR)**
- **BAUDOT, Franck**
  **F-78140 Velizy (FR)**

(74) Mandataire: **Le Cacheux, Samuel L.R. et al**
**Cabinet Lavoix**
**62, rue de Bonnel**
**69448 Lyon Cedex 03 (FR)**

(56) Documents cités:
**WO-A-97/38530**      **WO-A-99/18729**

- **DIFFIE W ET AL: "AUTHENTICATION AND AUTHENTICATED KEY EXCHANGES" DESIGNS, CODES AND CRYPTOGRAPHY, KLUWER ACADEMIC PUBLISHERS, BOSTON, US, vol. 2, no. 2, 1992, pages 107-125, XP000653208 ISSN: 0925-1022**
- **BRUCE SCHNEIER: "Applied Cryptography, Protocols, Algorithms and Source Code in C, Second Edition," 1996, JOHN WILEY & SONS, INC. , NEW YORK 218930 , XP002382963 cité dans la demande page 513 - page 516**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé d'établissement d'une clé de session et des unités pour la mise en oeuvre du procédé.

Un procédé bien connu pour l'établissement d'une clé de session entre une première et une seconde unités est celui de Diffie Hellman également connu sous le terme de protocole STS (Station-To-Station).

Dans le procédé de Diffie Hellman chaque unité construit un terme $\alpha$ à partir duquel l'autre unité peut établir une clé de session $K_s$ selon la relation suivante :

$$K_s = \alpha^\beta \texttt{ modulo n}$$

où :

- $\beta$ est un nombre aléatoire, et
- n est un nombre premier.

Le procédé de Diffie Hellman est vulnérable vis-à-vis de l'attaque de l'intercepteur et vis-à-vis de l'attaque par rejeu.

L'attaque de l'intercepteur est décrite en détail dans le document suivant :

Douglas Stinson, « Cryptographie Théorie et Pratique », International Thomson Publishing France, Paris, 1996 (section 8.4.1).

L'attaque par rejeu consiste essentiellement à enregistrer les messages envoyés par la première unité vers la seconde unité puis à ré-utiliser plus tard les messages enregistrés de manière à tromper la seconde unité.

Le document DIFFIE W. ET AL: « AUTHENTICATION AND AUTHENTICATED KEY EXCHANGES » en DESIGNS, CODES AND CRYPTOGRAPHY, KLUWER ACADEMIC PUBLISHERS, BOSTON, US, vol. 2, no. 2, 1992, pages 107-125, décrit le protocole STS (Station-To-Station) comprenant les deux premières étapes du procédé décrit ci-dessous. Ledit document décrit aussi l'envoi, de la seconde unité à la première unité, d'un message contenant le terme $\alpha$ et une signature du nombre aléatoire et/ou du terme $\alpha$ réalisé avec la clé privée de la seconde unité.

Aux sections 22.1 et 22.2 du livre de BRUCE SCHNEIER, « Cryptographie Appliquée », Edition WILEY, il est proposé un procédé d'établissement d'une clé de session robuste vis-à-vis de l'attaque de l'intercepteur et de l'attaque par rejeu. Ce procédé fonctionne correctement mais peut conduire à exécuter des opérations inutiles en cas d'attaque, ce qui se traduit par la mobilisation inutile de ressources informatiques dans l'une ou l'autre des unités.

Ce problème de mobilisation inutile de ressources informatiques est particulièrement important dans le cas où un tel procédé doit être mis en oeuvre entre une unité de désembrouillage et une unité cryptographique amovible d'un dispositif de réception de signaux multimédias embrouillés. En effet, classiquement, l'unité de désembrouillage et l'unité cryptographique amovible disposent de peu de ressources informatiques. Ceci est tout particulièrement vrai pour l'unité cryptographique amovible qui se présente sous la forme d'une carte à puce.

L'invention vise donc à remédier à ce problème dans le contexte des dispositifs de réception de signaux multimédias embrouillés en proposant un procédé d'établissement d'une clé de session entre une unité de désembrouillage et une unité cryptographique amovible plus économique en ressources informatiques.

L'invention a donc pour objet un procédé d'établissement d'une clé de session dans lequel :

a) l'une des unités, dite première unité, tire un premier nombre aléatoire et l'envoie à l'autre unité,
b) l'autre unité, dite seconde unité, construit un terme $\alpha$ à partir duquel la première unité peut établir la clé de session $K_s$ selon la relation suivante :

$$K_s = \alpha^\beta \texttt{ mod n}$$

où $\beta$ est un second nombre aléatoire tiré par la première unité et n est un nombre premier,
c) la seconde unité envoie à la première unité un message contenant conjointement le premier nombre aléatoire reçu, le terme $\alpha$ et une signature du nombre aléatoire reçu et/ou du terme $\alpha$ réalisée avec une clé privée $K_{3pr}$ de la seconde unité, puis

d) la première unité vérifie la signature à l'aide d'une clé publique $K_{3pu}$ correspondant à la clé privée $K_{3pr}$ et compare le premier nombre aléatoire reçu à celui envoyé, et

e) si la signature est incorrecte ou si le premier nombre aléatoire reçu ne correspond pas à celui envoyé, alors la première unité ne procède pas aux étapes suivantes permettant d'établir la clé de session.

Si une attaque de l'intercepteur est mise en oeuvre, celle-ci est détectée lors de l'étape d) en vérifiant la signature de sorte qu'aucune étape supplémentaire visant à établir la clé de session n'est exécutée.

Si une attaque par rejeu est mise en oeuvre, celle-ci est également détectée lors de l'étape d) en comparant le nombre aléatoire envoyé à celui reçu, de sorte qu'aucune étape supplémentaire visant à établir la clé de session n'est exécutée.

Ainsi, le procédé ci-dessus permet d'économiser des ressources informatiques par rapport au procédé divulgué aux sections 22.1 et 22.2 du livre de SCHNEIER. En effet, le procédé décrit dans le livre de SCHNEIER ne permet pas d'interrompre le procédé de construction de la clé de session dès qu'une attaque de l'intercepteur ou une attaque par rejeu est mise en oeuvre. Dès lors, des opérations de construction de la clé de session sont exécutées alors que celles-ci ne sont pas nécessaires puisque, lorsque l'attaque est découverte, la clé de session construite ou en cours de construction est, par exemple, abandonnée.

Les modes de réalisation de ce procédé d'établissement d'une clé de session peuvent comporter une ou plusieurs des caractéristiques suivantes :

- les étapes a) à e) sont réitérées une seconde fois en inversant les rôles des première et seconde unités ;
- préalablement aux étapes a) à e), l'unité de désembrouillage et l'unité cryptographique amovible échangent mutuellement :

  + une première clé publique $K_{1pu}$,
  + un premier certificat contenant au moins une deuxième clé publique $K_{2pu}$, ce certificat étant signé à l'aide d'une première clé privée $K_{1pr}$ correspondant à la première clé publique $K_{1pu}$, et
  + un second certificat contenant au moins une troisième clé publique $K_{3pu}$, ce certificat étant signé à l'aide d'une deuxième clé privée $K_{2pr}$ correspondant à la deuxième clé publique $K_{2pu}$, la troisième clé publique $K_{3pu}$ correspondant à la clé privée $K_{3pr}$ utilisée pour réaliser la signature lors de l'étape c), et

- l'unité de désembrouillage et l'unité cryptographique amovible vérifient chacune les premier et second certificats reçus et procèdent aux étapes a) à e) uniquement si l'unité de désembrouillage et l'unité cryptographique amovible ont pu vérifier avec succès l'authenticité des premier et second certificats reçus par chacune d'elle ;
- au moins l'une des unités incrémente un premier compteur interne en fonction du nombre de messages envoyés vers et/ou reçus de l'autre unité et déclenche automatiquement l'établissement d'une nouvelle clé de session si le premier compteur dépasse un premier seuil prédéterminé ;
- l'autre unité incrémente un second compteur interne en fonction du même nombre de messages et provoque automatiquement l'arrêt du désembrouillage des signaux multimédias si le second compteur dépasse un second seuil prédéterminé supérieur au premier seuil ;
- chacune des unités incrémente un compteur interné en fonction du nombre de messages envoyés et/ou reçus, au moins l'une des unités ajoute à chaque message envoyé vers l'autre unité un code de redondance calculé en fonction du contenu du message à envoyer et de la valeur actuelle de son compteur interne, et l'autre unité vérifie l'exactitude du message reçu en comparant le code de redondance ajouté à un code de redondance calculé en fonction du contenu du message reçu et de la valeur actuelle de son propre compteur interne.

Ces modes de réalisation du procédé d'établissement d'une clé de session présentent en outre les avantages suivants :

- l'échange de certificats entre l'unité de désembrouillage et l'unité cryptographique permet, par exemple, de s'assurer que seuls des fabricants agréés par une autorité de confiance, c'est-à-dire en possession d'un premier certificat valide, peuvent construire des unités de désembrouillage ou des unités cryptographiques fonctionnelles ;
- déclencher l'établissement d'une nouvelle clé de session en fonction de la valeur d'un compteur interne de messages permet de modifier régulièrement la clé de session, ce qui accroît la sécurité des échanges d'informations entre les deux unités ;
- déclencher l'arrêt du désembrouillage des signaux multimédias si un second compteur interne de messages dépasse un second seuil prédéterminé permet de lutter contre l'utilisation d'unités de désembrouillage ou d'unités cryptographiques pirates, qui ne déclencheraient jamais l'établissement d'une nouvelle clé de session ;
- utiliser des compteurs internes de messages dans chacune des unités et utiliser la valeur de ces compteurs pour calculer et vérifier un code de redondance permet de vérifier la synchronisation des messages échangés entre les deux unités et contribue à rendre difficile une attaque par rejeu ; et

- chiffrer l'ensemble des messages échangés entre les deux unités, y compris les messages de la procédure d'échange de certificat et de mise à la clé de session rend la cryptanalyse des informations échangées plus difficile.

L'invention a également pour objet des unités aptes à être mises en oeuvre dans le procédé ci-dessus d'établissement d'une clé de session.

L'invention sera mieux comprise à la lecture de la description qui va suivre, donnée uniquement à titre d'exemple et faite en se référant aux dessins sur lesquels :

- la figure 1 est une illustration schématique de l'architecture d'un système de transmission de signaux multimédias embrouillés comportant un dispositif de réception de ces signaux ;
- la figure 2 est un organigramme d'un procédé d'établissement de certificats cryptographiques pour le dispositif de réception de la figure 1 ;
- les figures 3A et 3B sont un organigramme d'un procédé d'établissement d'une clé de session entre une unité de désembrouillage et une unité cryptographique amovible du dispositif de réception de la figure 1 ; et
- la figure 4 est un organigramme d'un procédé d'échange de messages chiffrés en une unité de désembrouillage et une unité cryptographique amovible du dispositif de réception de la figure 1.

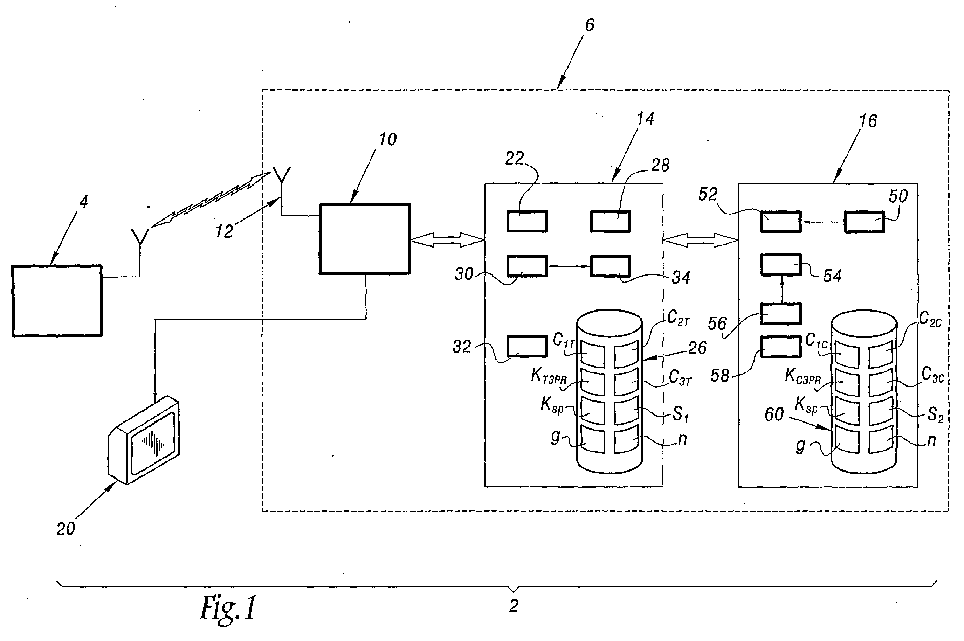

La figure 1 représente un système 2 de transmission et de réception de signaux multimédias embrouillés tel que, par exemple, des signaux audiovisuels ou des programmes multimédias. Le système 2 comporte un émetteur 4 apte à diffuser simultanément vers plusieurs dispositifs de réception les signaux multimédias embrouillés à l'aide d'un mot de contrôle. Cet émetteur 4 est également apte à transmettre vers chacun des dispositifs de réception des messages ECM (Entitlement Control Message) contenant le mot de contrôle utilisable pour désembrouiller les signaux multimédias ainsi que des messages EMM (Entitlement Management Message) contenant des informations de gestion des droits d'accès des abonnés.

Pour simplifier la figure 1, seul un dispositif de réception 6 est représenté. Seuls les détails du dispositif 6 nécessaires à la compréhension de l'invention sont décrits ici.

Le dispositif 6 est, par exemple, formé de trois entités c'est-à-dire :

- un décodeur 10 équipé d'une antenne 12 pour recevoir les signaux multimédias embrouillés diffusés par l'émetteur 4 et pour les décoder après leur désembrouillage,
- une unité 14 de désembrouillage des signaux multimédias reçus ; et
- une unité cryptographique amovible, telle qu'un processeur de sécurité amovible 16, apte à déchiffrer le mot de contrôle contenu dans un message ECM.

Dans la suite, la référence à un mot de contrôle s'applique à un ou plusieurs des mots de contrôle d'un ECM.

Le décodeur 10 est également raccordé à une unité d'affichage 20 tel qu'un poste de télévision, sur lequel sont affichés les signaux multimédias désembrouillés par l'unité 14.

L'unité 14 se présente, par exemple, sous la forme d'une carte PCMCIA (Personal Computer Memory Card International Association) amovible, destinée à être insérée dans le décodeur 10 conformément à la norme EN 50221 « Common Interface Spécification for Conditional Access and other Digital Video Broadcasting Decoder Applications ». A cet effet, le décodeur 10 et l'unité 14 sont chacun équipés de connecteurs d'accouplage et de désaccouplage mécanique de l'unité 14 et du décodeur 10. Cette unité 14 comporte un désembrouilleur 22 apte à désembrouiller le signal multimédia embrouillé à l'aide du mot de contrôle.

L'unité 14 comporte des moyens de stockage d'informations représentés ici sous la forme d'une mémoire 26 ainsi qu'un module de chiffrement et de déchiffrement 28.

Le module 28 est apte à chiffrer et à déchiffrer tout ou partie de chaque message échangé entre l'unité 14 et le processeur 16 avec une clé de session $K_s$. Les algorithmes de chiffrement et de déchiffrement utilisés sont, par exemple, le DES (Data Encryption Standard).

La mémoire 26 contient trois certificats cryptographiques $C_{1T}$, $C_{2T}$, et $C_{3T}$. Le certificat $C_{1T}$ contient au moins :

- une clé publique $K_{T1pu}$,
- une date d'expiration de ce certificat, et
- une signature $S_{ign1}K_{T1pr}$ réalisée à partir des données contenues dans le certificat $C_{1T}$ et à l'aide d'une clé privée $K_{T1pr}$ correspondant à la clé publique $K_{T1pu}$ (certificat auto-signé).

Le certificat $C_{2T}$ contient au moins :

- une clé publique $K_{T2pu}$,
- une date d'expiration de ce certificat, et
- une signature $Si_{gn2}K_{T1pr}$ réalisée à partir des données contenues dans le certificat $C_{2T}$ et à l'aide de la clé privée $K_{T1pr}$.

Enfin, le certificat $C_{3T}$ contient au moins une clé publique $K_{T3pu}$, une date d'expiration et une signature $S_{ign3}K_{T2pr}$. La signature $Si_{gn3}K_{T2pr}$ est réalisée à partir du contenu du certificat $C_{3T}$ et à l'aide d'une clé privée $K_{T2pr}$ correspondant à la clé publique $K_{T2pu}$.

La mémoire 26 contient également une clé privée $K_{T3pr}$, un seuil $S_1$, une clé de session $K_{sp}$ préchargée, un grand nombre premier $\underline{n}$ ainsi qu'un nombre $\underline{g}$ appartenant à l'ensemble $Z_n$, l'ensemble $Z_n$ est l'ensemble des entiers compris entre 0 et n-1.

La clé privée $K_{T3pr}$ correspond à la clé publique $K_{T3pu}$.

L'ensemble des données décrites ici comme étant contenu dans la mémoire 26 est, par exemple, enregistré dans cette mémoire 26 lors de la fabrication de l'unité 14. L'unité 14 comporte également un compteur 30 de messages échangés entre l'unité 14 et le processeur 16, un registre 32 contenant la date courante et un calculateur 34 propre à établir un code de redondance d'un message envoyé au processeur 16 et à vérifier le code de redondance d'un message reçu.

Le processeur de sécurité 16 se présente, par exemple, sous la forme d'une carte à puce apte à être insérée dans l'unité de désembrouillage 14. A cet effet, l'unité 14 et le processeur 16 comportent chacun des interfaces de connexion, telles que des connecteurs mécaniques d'accouplage et désaccouplage de l'unité 14 et du processeur 16.

Ce processeur de sécurité comporte un module 52 apte à chiffrer et à déchiffrer tout ou partie d'un message échangé entre le processeur 16 et l'unité 14 en utilisant des algorithmes de chiffrement et de déchiffrement compatibles avec ceux utilisés par le module 28.

Le processeur 16 comporte en outre un module 50 d'extraction et de déchiffrement d'un mot de contrôle contenu dans un message ECM.

Le processeur 16 comporte également :

- un calculateur 54 propre à calculer le code de redondance d'un message envoyé à l'unité 14 et à vérifier le code de redondance d'un message reçu de l'unité 14,
- un compteur interne 56 de messages échangés entre l'unité 14 et le processeur 16,
- un registre interne 58 contenant la date courante, et
- des moyens de stockage d'informations représentés sous la forme d'une mémoire 60.

La mémoire 60 contient trois certificats cryptographiques $C_{1c}$, $C_{2c}$ et $C_{3c}$.

Le certificat $C_{1c}$ contient au moins la clé publique $K_{C1pu}$, une date d'expiration du certificat et une signature $S_{ign1}K_{C1pr}$. La signature $S_{ign1}K_{C1pr}$ est réalisée à partir du contenu du certificat $C_{1c}$ à l'aide d'une clé privée $K_{C1pr}$. La clé $K_{C1pr}$ correspond à la clé publique $K_{C1pu}$ (certificat auto-signé).

Le certificat $C_{2c}$ contient au moins une clé publique $K_{C2pu}$, une date d'expiration du certificat $C_{2c}$ et une signature $S_{ign2}K_{C1pr}$ réalisée à partir du contenu du certificat $C_{2c}$ et à l'aide de la clé privée $K_{C1pr}$.

Le certificat $C_{3c}$ contient la clé publique $K_{C3pu}$, une date d'expiration de ce certificat $C_{3c}$, et une signature $S_{ign3}K_{C2pr}$. La signature $S_{ign3}K_{C2pr}$ est réalisée à partir du contenu du certificat $C_{3c}$ et à l'aide de la clé privée $K_{C2pr}$.

La mémoire 60 contient également une clé privée $K_{C3pr}$, la clé de session préchargée $K_{sp}$, un seuil $S_2$ supérieur au seuil $S_1$, le nombre premier $\underline{n}$ et le nombre g. La clé privée $K_{C3pr}$ correspond à la clé publique $K_{C3pu}$. La clé $K_{sp}$ préchargée dans la mémoire 60 a la même valeur que la clé $K_{sp}$ chargée dans la mémoire 26.

Les données contenues dans la mémoire 60 décrite ci-dessus sont, par exemple, enregistrées lors de la fabrication du processeur 16.

Le processeur 16 peut échanger des messages avec l'unité 14 uniquement lorsque celui-ci est inséré dans l'unité 14.

De même, l'unité 14 peut transmettre un signal multimédia désembrouillé au décodeur 10 uniquement lorsque cette unité 14 est insérée dans le décodeur 10.

L'émetteur 4 diffuse des signaux multimédias embrouillés à l'aide d'un mot de contrôle. Ce mot de contrôle est transmis sous forme chiffré au dispositif 6 dans un message ECM.

Le dispositif 6 reçoit les signaux multimédias embrouillés et le message ECM, ainsi que des messages EMM (Entitlement Management Message) de gestion des droits d'accès et de la sécurité du système. Les messages ECM et EMM sont tranmis par l'unité 14 au processeur 16. En particulier, le message ECM est transmis au module 50 du processeur 16 qui extrait du message ECM le mot de contrôle et le déchiffre.

Le mot de contrôle ainsi déchiffré est alors transmis à l'unité 14 où il est appliqué au désembrouilleur 22. Le désembrouilleur 22 utilise le mot de contrôle déchiffré pour désembrouiller les signaux multimédias embrouillés reçus. Les signaux multimédias désembrouillés sont alors envoyés au décodeur. 10 qui les décode et les envoie à l'unité d'affichage 20 pour être présentés à un utilisateur.

Dans le dispositif 6, les messages échangés entre l'unité 14 et le processeur 16 sont chiffrés à l'aide de la clé de session $K_s$. Selon la réalisation, chaque message est ainsi chiffré au totalité ou en partie. Dans le cas d'un chiffrement partiel de chaque message, le mot de contrôle extrait de l'ECM et transmis du processeur 16 à l'unité 14 constitue la partie systématiquement chiffrée par le module 52.

La clé de session $K_s$ est connue uniquement du processeur 16 et de l'unité 14. En particulier, la clé $K_s$ est différente d'un dispositif de réception à un autre. Ainsi, l'interception des messages échangés entre le processeur 16 et l'unité 14 est rendue difficile et inutilisable par un autre dispositif de réception.

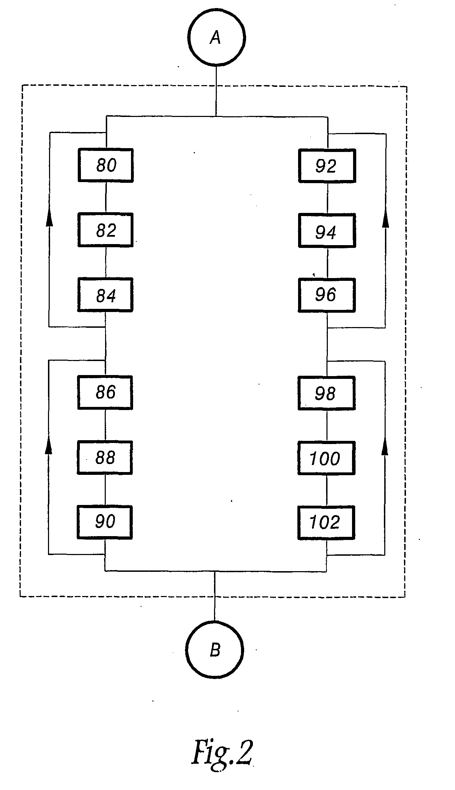

Le fonctionnement du dispositif 6 va maintenant être décrit en regard des organigrammes des figures 2, 3A, 3B et 4.

La figure 2 représente un procédé d'établissement des certificats $C_{1T}$, $C_{2T}$, $C_{3T}$, $C_{1C}$, $C_{2c}$ et $C_{3c}$.

Initialement, une autorité de confiance est pourvue du certificat $C_{1T}$, du certificat $C_{1c}$ et des clés privées $K_{T1pr}$ et $K_{C1pr}$. Cette autorité de confiance est, par exemple, l'entité chargée de garantir la fiabilité des échanges de messages entre l'unité 14 et le processeur 16.

Lors d'une étape 80, l'autorité de confiance choisit pour un fabricant d'unités de désembrouillage une paire de clés privées/publiques $K_{T2pr}/K_{T2pu}$.

Ensuite, lors d'une étape 82, l'autorité construit pour ce fabricant le certificat $C_{2T}$ et le signe à l'aide de sa clé privée $K_{T1pr}$.

Lors d'une étape 84, le certificat $C_{2T}$ construit lors de l'étape 82, le certificat $C_{1T}$ et la clé privée $K_{T2pr}$ sont transmis au fabricant d'unités de désembrouillage.

Les étapes 80 à 84 sont réitérées pour chaque fabricant d'unités de désembrouillage. Chaque fabricant d'unités de désembrouillage se voit affecté, lors de l'étape 80, d'une paire de clés privée/publique $K_{T2pr}/K_{T2pu}$ différentes de celles affectées aux autres fabricants.

Ensuite, chaque fabricant, lors d'une étape 86, choisit une paire de clés privée/publique $K_{T3pr}/K_{T3pu}$ pour chaque unité de désembrouillage fabriquée. La paire de clés privée/publique $K_{T3pr}/K_{T3pu}$ est de préférence unique pour chaque unité de désembrouillage fabriquée.

Ensuite, lors d'une étape 88, le fabricant construit le certificat $C_{3T}$ de l'unité de désembrouillage et le signe à l'aide de la clé privée $K_{T2pr}$ qu'il a reçue lors de l'étape 84.

Enfin, lors d'une étape 90, les certificats $C_{1T}$, $C_{2T}$, $C_{3T}$ et la clé privée $K_{T3pr}$ sont enregistrés dans la mémoire 26 de l'unité 14.

Lors de l'étape 90, la clé de session préchargée $K_{sp}$ et les nombres n et g sont également enregistrés dans la mémoire 26.

En parallèle aux étapes 80 à 84, lors d'étapes 92 à 96, l'autorité de confiance réalise les mêmes tâches que celles réalisées pour les fabricants d'unités de désembrouillage, mais cette fois ci pour les fabricants de processeurs de sécurité. Par exemple, les étapes 92, 94 et 96 sont respectivement identiques aux étapes 80, 82 et 84 à l'exception du fait que l'indice « T » dans les certificats $C_{1T}$ et $C_{2T}$ ainsi que dans les clés $K_{T1pr}$, $K_{T2pr}$, $K_{T2pu}$ est remplacé par l'indice « C ».

De même, en parallèle des étapes 86 à 90, lors d'étapes 98 à 102, le fabricant de processeurs de sécurité effectue les mêmes tâches que celles décrites pour les fabricants d'unités de désembrouillage. Par exemple, les étapes 98, 100 et 102 sont respectivement identiques aux étapes 86, 88 et 90 à l'exception du fait que l'indice « T » dans les termes $C_{1T}$, $C_{2T}$, $C_{3T}$, $K_{T2pr}$, $K_{T3pr}$, $K_{T3pu}$ est remplacé par l'indice « C ».

Cet empilement de trois niveaux de certificats permet de garantir que seul un fabricant agréé par l'autorité de confiance peut fabriquer une unité de désembrouillage ou un processeur de sécurité susceptibles de fonctionner dans le dispositif 6. En effet, par exemple, un fabricant non agréé d'unité de désembrouillage 14 ne peut pas générer un certificat $C_{3T}$ signé par une clé privée $K_{T2pr}$ correspondant à un certificat $C_{2T}$ valide.

Après avoir été fabriquée, l'unité 14 est insérée dans le décodeur 10 et le processeur 16 est inséré dans l'unité 14 afin de pouvoir désembrouiller les signaux émis par l'émetteur 4.

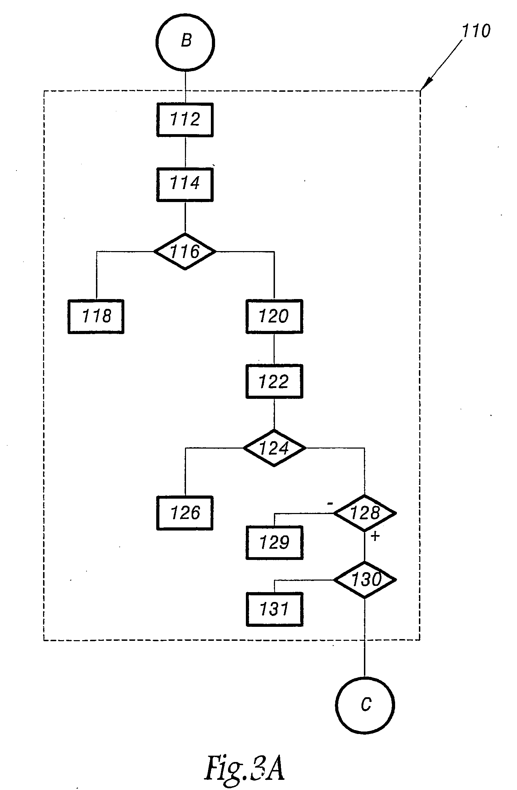

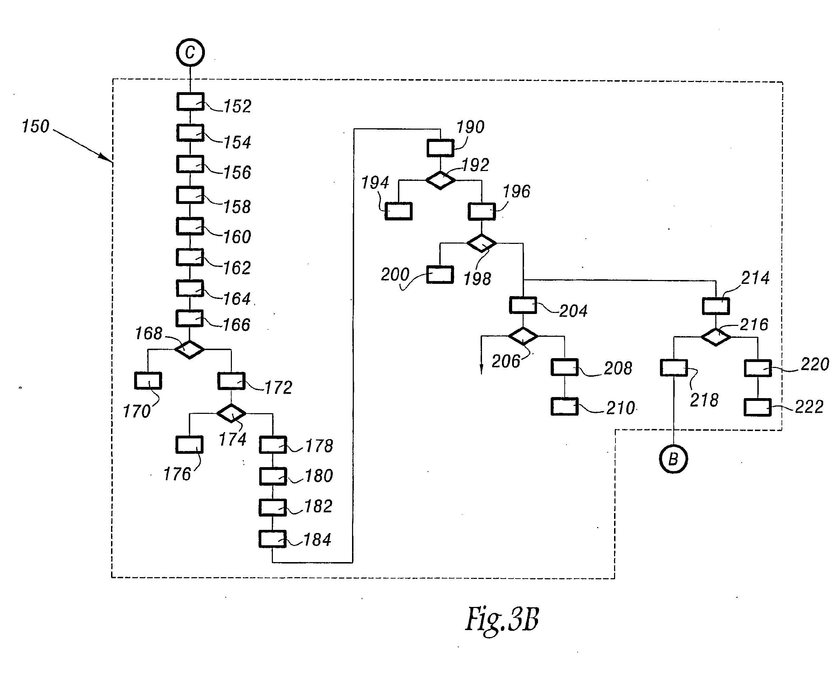

Le procédé des figures 3A et 3B d'établissement d'une clé de session symétrique commune est alors exécuté.

Initialement, lors d'une phase 110, le processeur 16 et l'unité 14 vérifient mutuellement leur authenticité en échangeant leurs certificats cryptographiques.

Plus précisément, lors d'une étape 112, l'unité 14 envoie le certificat $C_{1T}$ au processeur 16. Lors d'une étape 114, le processeur 16 extrait du certificat $C_{1T}$ la clé publique $K_{T1pu}$.

Ensuite, lors d'une étape 116, le processeur 16 vérifié que le certificat $C_{1T}$ reçu est valide. Lors de cette étape 116, il vérifie la signature du certificat $C_{1T}$ à l'aide de la clé publique $K_{T1pu}$ et compare la date d'expiration contenue dans ce certificat à la date courante contenue dans le registre 58.

Si le certificat n'est pas correctement signé ou si ce certificat est périmé (c'est-à-dire que la date courante est postérieure à la date d'expiration), lors d'une étape 118, le processeur 16 envoie à l'unité 14 un message commandant l'arrêt de cette unité 14 et s'arrête. Le procédé d'établissement d'une clé de session est donc immédiatement interrompu.

Dans le cas contraire, c'est-à-dire si le certificat $C_{1T}$ reçu est valide, le processeur 16 envoie, lors d'une étape 120, le certificat $C_{1C}$ à l'unité 14.

Lors d'une étape 122, l'unité 14 extrait la clé publique $K_{C1pu}$ du certificat $C_{1C}$ puis vérifie, lors d'une étape 124, la validité du certificat $C_{1C}$ reçu.

Lors de cette étape 124, l'unité 14 vérifie la signature du certificat $C_{1C}$ et compare la date d'expiration contenue dans ce certificat à la date courante contenue dans le registre 32.

Si la signature du certificat $C_{1C}$ est incorrecte ou si ce certificat est périmé, lors d'une étape 126, l'unité 14 envoie un message au processeur 16 pour commander l'arrêt du processeur 16 et l'unité 14 s'arrête. Ainsi, aucune autre étape visant à établir la clé de session n'est exécutée.

Dans le cas contraire, c'est-à-dire si le certificat reçu $C_{1C}$ est valide, alors, lors d'une étape 128, l'unité 14 et le processeur 16 s'échangent et vérifient mutuellement leurs certificats $C_{2C}$ et $C_{2T}$. A cet effet, lors de l'étape 128, les étapes 112 à 126 sont réitérées en remplaçant les termes $C_{1T}$, $C_{1C}$, $K_{T1pu}$, $K_{C1pu}$ respectivement par les termes $C_{2T}$, $C_{2C}$, $K_{T2pu}$, $K_{C2pu}$.

A l'issue de l'étape 128, s'il a été établi qu'un des certificats échangés n'est pas correctement signé ou est périmé, l'unité 14 (respectivement le processeur 16), dans une étape 129 équivalente à l'étape 126 (respectivement 118), envoie au processeur 16 (respectivement à l'unité 14) un message commandant l'arrêt de ce processeur 16 (respectivement cette unité 14) et s'arrête. Par contre, si à l'issue de l'étape 128, il a été établi que les certificats $C_{2T}$ et $C_{2C}$ sont valides, alors lors d'une étape 130, l'unité 14 et le processeur 16 s'échangent et vérifient mutuellement la validité de leurs certificats $C_{3T}$ et $C_{3C}$. Par exemple, lors de l'étape 130, les étapes 112 à 126 sont réitérées en remplaçant les termes $C_{1T}$, $C_{1C}$, $K_{T1pu}$, $K_{C1pu}$ par les termes $C_{3T}$, $C_{3C}$, $K_{T3pu}$, $K_{C3pu}$.

A l'issue de l'étape 130, s'il a été établi qu'un des certificats échangés n'est pas correctement signé ou est périmé, l'unité 14 (respectivement le processeur 16), dans une étape 131 équivalente à l'étape 126 (respectivement 118), envoie au processeur 16 (respectivement à l'unité 14) un message commandant l'arrêt de ce processeur 16 (respectivement cette unité 14) et s'arrête. Par contre, si à l'issue de l'étape 130, il a été établi que les certificats $C_{3T}$ et $C_{3C}$ sont valides, alors une phase 150 de construction de la nouvelle clé de session $K_s$ est déclenchée puisque tous les certificats échangés lors de la phase 110 sont valides.

On comprend donc que grâce à cette phase 110 de vérification mutuelle des certificats, une unité 14 ne peut fonctionner correctement avec un processeur 16 que si cette unité 14 et ce processeur 16 ont été fabriqués par des fabricants agréés.

De plus, à l'issue de la phase 110, l'unité 14 dispose notamment de la clé publique $K_{C3pu}$ certifiée et le processeur 16 dispose notamment de la clé publique $K_{T3pu}$ certifiée.

Les messages servant à l'accomplissement de la phase 110 de vérification mutuelle des certificats sont échangés entre l'unité 14 et le processeur 16 chiffrés par la clé de session courante. Il en est de même des messages échangés par l'unité 14 et le processeur 16 servant à l'accomplissement de la phase 150 de construction de la nouvelle clé de session.

Au début de la phase 150, lors d'une étape 152, l'unité 14 tire un nombre aléatoire A et l'envoie, lors d'une étape 154, au processeur 16.

Lors d'une étape 156, le processeur 16 reçoit le message contenant le nombre A et extrait ce nombre.

Lors d'une étape 158, le processeur 16 tire un nombre aléatoire $\underline{u}$, puis construit, lors d'une étape 160, un terme $\underline{X}$ à l'aide de la relation suivante :

$$X = g^u \bmod n \qquad\qquad (1)$$

où :

- g et n sont les nombres enregistrés dans la mémoire 60.
- « mod » indique que l'exponentiation $g^u$ est réalisée modulo n.

Ensuite, lors d'une étape 162, le processeur 16 associe le terme X et le nombre aléatoire A selon une combinaison prédéfinie et signe le résultat de cette combinaison avec sa clé privée $K_{C3pr}$. Une telle combinaison est par exemple la concaténation du terme X et du nombre aléatoire A.

Lors d'une étape 164, le processeur 16 tire un nombre aléatoire B.

Après cela, lors d'une étape 166, un message contenant conjointement le nombre aléatoire B, le terme X, le nombre aléatoire A et la signature de X et de A est envoyé à l'unité 14.

Quand elle reçoit ce message, lors d'une étape 168, l'unité 14 vérifie la signature du terme X et du nombre aléatoire A avec la clé publique $K_{C3pu}$.

Si la signature est incorrecte, lors d'une étape 170, l'unité 14 commande l'arrêt du processeur 16 puis s'arrête.

Dans le cas contraire, c'est-à-dire si la signature du terme X et du nombre aléatoire A est correcte, lors d'une étape 172, l'unité 14 extrait le terme X et le nombre aléatoire A du message reçu.

Ensuite, lors d'une étape 174, l'unité 14 compare le nombre A reçu au nombre A envoyé lors de 'l'étape 154.

Si les nombres aléatoires reçus et envoyés sont différents, alors lors d'une étape 176, l'unité 14 s'arrête.

Dans le cas contraire, le procédé se poursuit par une étape 178 lors de laquelle l'unité 14 extrait le nombre aléatoire B du message reçu et tire un nombre aléatoire v. Ensuite, lors d'une étape 180, l'unité 14 construit un terme Y à l'aide de la relation suivante :

$$Y = g^v \bmod n \qquad\qquad\qquad (2)$$

Lors d'une étape 182, l'unité 14 associe le terme Y et le nombre aléatoire B selon une combinaison prédéfinie, telle qu'une concaténation, et signe le résultat de cette combinaison avec la clé privée $K_{T3pr}$.

Lors d'une étape 184, l'unité 14 envoie au processeur 16 un message contenant conjointement le terme Y, le nombre aléatoire B et la signature de Y et de B.

Lors d'une étape 190, le processeur 16 reçoit le message et vérifie, lors d'une étape 192, la signature du terme Y et du nombre aléatoire B avec la clé publique $K_{T3pu}$.

Si la signature est incorrecte, lors d'une étape 194, le processeur 16 commande l'arrêt de l'unité 14 puis s'arrête.

Dans le cas contraire, le processeur 16 extrait, lors d'une étape 196, le terme Y et le nombre aléatoire B du message reçu.

Ensuite, le processeur 16 compare, lors d'une étape 198, le nombre aléatoire B reçu au nombre aléatoire B envoyé lors de l'étape 166. Si ces nombres aléatoires ne sont pas égaux, alors lors d'une étape 200, le processeur 16 s'arrête.

Si non, lors d'étapes 204 et 214, le processeur 16 et l'unité 14 procèdent chacun à la construction de la nouvelle clé de session $K_s$.

Lors de l'étape 209, le processeur 16 construit la nouvelle clé de session à l'aide de la relation suivante :

$$K_s = Y^u \bmod n \qquad\qquad\qquad (3)$$

Ensuite, lors d'une étape 206, le processeur vérifie si la clé de session construite lors de l'étape 204 appartient, pour les algorithmes de chiffrement et de déchiffrement mis en oeuvre, à une liste de clés faibles ou de clés semi-faibles. Dans l'exemple de l'algorithme DES, la liste des clés faibles ou des clés semi-faibles est décrite dans la section 12.3 du livre de Bruce Schneier.

Si la clé de session construite appartient à une telle liste des clés faibles ou semi-faibles, alors le processeur 16 conserve la clé de session courante pour chiffrer et déchiffrer les messages échangés avec l'unité 14.

Si la clé de session construite n'appartient pas à cette liste de clés faibles ou semi-faibles, alors, lors d'une étape 208, le processeur 16 réinitialise son compteur 56 puis, lors d'une étape 210, remplace la clé de session courante par la nouvelle clé de session désormais utilisée pour chiffrer et déchiffrer les messages échangés avec l'unité 14.

En parallèle aux étapes 204 à 210, lors de l'étape 214, l'unité 14 construit la nouvelle clé de session $K_s$ à l'aide de la relation suivante :

$$K_s = X^v \bmod n \qquad\qquad\qquad (4)$$

L'unité 14 procède alors à une étape 216 de vérification pour savoir si la clé de session construite à l'étape 214 appartient, pour les algorithmes de chiffrement et de déchiffrement mis en oeuvre, à une liste des clés faibles ou semi-faibles. L'étape 216 est obligatoirement conçue de façon cohérente avec l'étape 206.

Si la clé de session construite appartient à une telle liste de clés faibles ou semi-faibles, lors d'une étape 218, l'unité 14 déclenche immédiatement l'établissement d'une nouvelle clé de session. Pour cela, le procédé retourne à l'étape 112.

Si la clé de session construite n'est pas une clé faible ou semi-faible, lors d'une étape 220, l'unité 14 réinitialise son compteur 30 puis, lors d'une étape 222, remplace la clé de session courante par la nouvelle clé de session construite. Ainsi, les messages suivants échangés entre l'unité 14 et le processeur 16 sont chiffrés à l'aide de la nouvelle clé de session.

On notera que, grâce aux étapes 168 et 192, l'attaque de l'intercepteur est immédiatement détectée ce qui provoque l'arrêt immédiat du procédé de construction de la clé de session et le blocage des échanges. De même, grâce aux étapes 174 et 198 une attaque par rejeu est immédiatement détectée ce qui provoque l'arrêt immédiat de la construction de la clé de session et le blocage des échanges.

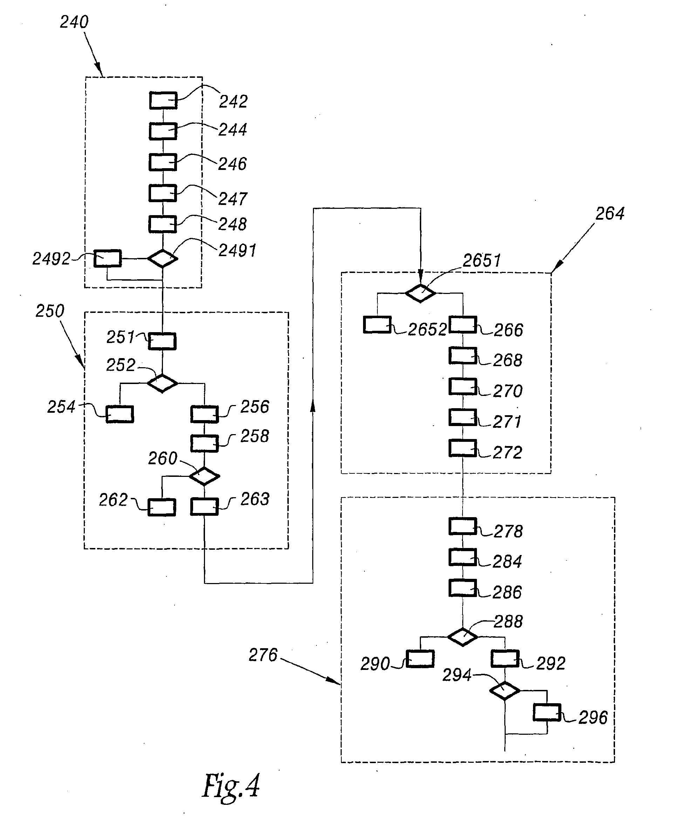

Le procédé de la figure 4 précise la façon dont sont construits et chiffrés les messages échangés entre l'unité 14 et le processeur 16.

Ce procédé débute, par exemple, dans l'unité 14 par une phase 240 d'envoi d'un message $M_T$ de l'unité 14 vers le processeur 16.

Au début de la phase 240, lors d'une étape 242, le compteur 30 est incrémenté d'un pas prédéterminé.

Ensuite, lors d'une étape 244, le calculateur 34 calcule le code de redondance $R_T$ du message $M_T$. Ce code de redondance est le résultat d'un algorithme cryptographique, tel qu'une fonction de hachage, appliqué au message $M_T$ et paramétré par la clé de session courante et par la valeur courante du compteur de message 30. Ce code de redondance permettra au processeur 16 de vérifier l'intégrité du message reçu.

Ensuite, lors d'une étape 246, le message $M_T$ est chiffré à l'aide de la clé de session courante $K_s$ pour obtenir le cryptogramme $M_T^*$.

Lors d'une étape 247 on constitue un message $M_{RT}$ contenant le cryptogramme $M_T^*$ et le code de redondance $R_T$

Le message $M_{RT}$ est alors envoyé au processeur 16 lors d'une étape 248.

Lors d'une étape 2491, sous réserve qu'une procédure de changement de clé de session ne soit pas en cours, l'unité 14 compare la valeur du compteur de messages 30 au seuil S1. Si ce seuil est atteint ou dépassé, l'unité 14 mémorise lors d'une étape 2492 la nécessité d'activer une procédure de changement de clé de session qui sera effectuée conformément au procédé des figures 3A et 3B. Cette procédure de changement de clé sera déclenchée automatiquement par l'unité 14, notamment après que le message $M_{RT}$ aura été traité par le processeur 16 pour ne pas interrompre le traitement en cours. Les messages échangés lors de la procédure de changement de clé de session sont traités conformément au procédé de la figure 4.

Le processeur 16 procède alors à une phase 250 de réception du message $M_{RT}$.

Au début de la phase 250, lors d'une étape 251, le processeur 16 reçoit le message $M_{RT}$ envoyé par l'unité 14.

Le processeur 16 compare alors, lors d'une étape 252, la valeur courante du compteur 56 au seuil $S_2$.

Si la valeur du compteur 56 a atteint ou dépassé le seuil $S_2$, alors le processeur 16 s'arrête, lors d'une étape 254.

Dans le cas contraire, lors d'une étape 256, le compteur 56 est incrémenté d'un pas.

Les pas d'incrémentation du compteur 30 de l'unité 14 et du compteur 56 du processeur 16 peuvent être quelconques, par exemple de un, mais doivent être les mêmes pour que les compteurs 30 et 56 soient synchronisés c'est-à-dire qu'avant les étapes de vérification du code de redondance leurs valeurs soient identiques. On notera aussi que la synchronisation des compteurs 30 et 56 ne nécessite pas d'échanger explicitement la valeur des compteurs entre l'unité 14 et le processeur 16.

Ensuite, lors d'une étape 258, le cryptogramme $M_T^*$ est extrait du message $M_{RT}$ reçu puis déchiffré par le module 52 avec la clé de session courante pour obtenir le message $M_T$.

Lors d'une étape 260, le calculateur 54 vérifie le code de redondance $R_T$ contenu dans le message $M_{RT}$ reçu. A cet effet, il calcule le code de redondance $R_T'$ du message $M_T$ à l'aide de la clé de session courante et de la valeur courante du compteur 56 de la même façon que l'unité 14 à l'étape 244.

Si le code de redondance reconstruit $R_T'$ ne correspond pas au code $R_T$ contenu dans le message reçu, alors, lors d'une étape 262, le processeur 16 s'arrête.

Dans le cas contraire, le processeur 16 traite lors d'une étape 263 le message $M_T$ reçu.

Le processeur 16 peut également procéder à une phase 264 d'envoi d'un message $M_C$ vers l'unité 14. Au début de la phase 264, le processeur 16 teste lors d'une étape 2651 si le compteur 56 a atteint ou dépassé le seuil S2. Si c'est le cas, il s'arrête lors d'une étape 2652.

Sinon, lors d'une étape 266, le compteur 56 est incrémenté d'un pas. Ensuite, lors d'une étape 268, le calculateur 54 calcule le code de redondance $R_C$ du message $M_C$. Comme à l'étape 244, ce code de redondance est paramétré par la clé de session courante et la valeur courante du compteur de message 56.

Lors de l'étape 270 suivante, le message $M_C$ est chiffré à l'aide de la clé de session $K_s$ pour obtenir un cryptogramme $M_C^*$.

Lors d'une étape 271 on constitue un message $M_{RC}$ contenant le cryptogramme $M_{C*}$ et le code de redondance $R_C$. Le message $M_{RC}$ est alors envoyé à l'unité 14 lors d'une étape 272.

L'unité 14 procède alors à une phase 276 de réception du message envoyé par le processeur 16.

Au début de la phase 276, lors d'une étape 278, l'unité 14 reçoit le message envoyé par le processeur 16.

Lors d'une étape 284, le compteur 30 est incrémenté d'un pas. Comme aux étapes 242, 256 et 266, le pas d'incrémentation des compteurs 30 et 56 peut être quelconque mais doit être le même, pour garantir la synchronisation entre les deux compteurs.

Puis, lors d'une étape 286, le module 28 extrait le cryptogramme $M_C{}^*$ du message reçu et le déchiffre avec la clé de session $K_S$ courante.

Ensuite, lors d'une étape 288, le calculateur 34 vérifie le code de redondance $R_C$ contenu dans le message reçu. A cet effet, il calcule le code de redondance $R_C{}'$ du message $M_C$ à l'aide de la clé de session courante et de la valeur courante du compteur 30 de la même façon que le processeur 16 à l'étape 268.

Si le code de redondance $R_C{}'$ reconstruit est différent du code de redondance $R_C$ reçu, alors l'unité 14 s'arrête lors d'une étape 290.

Dans le cas contraire, l'unité 14 traite le message déchiffré $M_C$, lors d'une étape 292.

Lors d'une étape 294, sous réserve qu'une procédure de changement de clé de session ne soit pas en cours, l'unité 14 compare la valeur du compteur de messages 30 au seuil S1. Si ce seuil est atteint ou dépassé, l'unité 14 mémorise lors d'une étape 296 la nécessité d'activer une procédure de changement de clé de session qui sera déclenchée automatiquement par l'unité 14. La procédure de changement de clé de session est effectuée conformément au procédé des figures 3A et 3B avec des messages traités conformément au procédé de la figure 4.

On notera que immédiatement après la première insertion du processeur 16 dans l'unité 14, la clé de session utilisée pour chiffrer les messages échangés est la clé pré-enregistrée $K_{sp}$. Cette clé sert à masquer les messages échangés lors de la première mise à la clé conforme au procédé des figures 3A et 3B.

De nombreux autres modes de réalisation du système 2 et des procédés des figures 2, 3A, 3B et 4 sont possibles. Par exemple, l'étape 162 peut être remplacée par une étape de signature lors de laquelle soit seul le terme X soit seul le nombre aléatoire A est signé avec la clé privée $K_{C3pr}$. De même, l'étape 182 peut être remplacée par une étape lors de laquelle soit seul le terme Y soit seul le nombre aléatoire B est signé avec la clé $K_{T3pr}$. Les étapes suivantes du procédé des figures 3A et 3B sont alors adaptées en conséquence

Les certificats $C_{1T}$ et $C_{1C}$ peuvent être remplacés respectivement par les valeurs des clés $K_{T1pu}$ et $K_{C1pu}$ sans qu'un certificat de ces clés publiques soit utilisé.

Si une réponse est systématiquement envoyée à chaque message reçu, il est possible d'incrémenter les compteurs 30 et 56 soit uniquement lors de la réception d'un message soit uniquement lors de l'envoi d'un message.

Les certificats échangés entre le processeur 16 et l'unité 14 peuvent contenir des informations complémentaires permettant à chacune de ces unités d'identifier selon divers critères l'autre unité. Suite à l'analyse de ces informations complémentaires, l'une des unités peut adopter un comportement spécifique adapté à l'autre unité comme cela a, par exemple, été décrit dans la demande de brevet FR 2 841 714.

Le code de redondance transmis dans les messages échangés peut également être utilisé, conjointement à la clé de session $K_s$, pour initialiser le chiffrement des messages, lors des étapes 246 et 270, et leur déchiffrement, lors des étapes 258 et 286,.

Le chiffrement peut porter sur la combinaison du message $M_T$ (respectivement $M_C$) et de son code de redondance. Dans ce cas, les étapes 246 et 247 (respectivement 270 et 271) sont permutées. Le message $M_T$ (respectivement $M_C$) et son code de redondance sont d'abord combinés lors de l'étape 247 (respectivement 271) puis cette combinaison est chiffrée lors de l'étape 246 (respectivement 270) pour obtenir le message à transmettre. De même, lors de l'étape 258 (respectivement 286), le déchiffrement porte sur le message reçu et fournit le message $M_T$ (respectivement $M_C$) et son code de redondance. Dans ce cas l'initialisation du chiffrement par le code de redondance n'est pas applicable.

Lorsque l'une des unités s'arrête suite à la détection d'une tentative d'attaque, il n'est pas nécessaire que celle-ci demande, avant de s'arrêter, l'arrêt de l'autre unité. Par exemple, l'arrêt de l'unité se traduit par l'absence de réponse à un message, cette absence de réponse pouvant être interprétée par l'autre unité comme étant une commande d'arrêt. A cet effet, les unités mettront typiquement en oeuvre une minuterie déclenchant automatiquement l'arrêt de l'unité en question si celle-ci n'a pas reçu une réponse à un message dans le temps décompté par la minuterie.

Le procédé de la figure 2 est décrit dans le cas particulier ou les autorités pourvus des certificats $C_{2T}$ et $C_{2C}$ sont des fabricants ce qui permet de contrôler l'interopérabilité des terminaux ou processeurs fabriqués par différents fabricants. En variante, des certificats différents $C_{2T}$ et $C_{2C}$ sont affectés à différents opérateurs de signaux multimédia. Dans ce cas là, les certificats $C_{2T}$ et $C_{2C}$ permettent de contrôler l'interopérabilité des terminaux et des processeurs de différents opérateurs.

Dans un autre exemple de réalisation, l'unité 14 est intégrée dans le décodeur 10.

Dans un autre exemple de réalisation, les données contenues dans la mémoire 26 ou 60 peuvent être modifiées par des messages spécifiques, en particulier les certificats peuvent être renouvelés en fonction de leurs périodes de validité.

**Revendications**

1. Procédé d'établissement d'une clé de session $K_s$ symétrique commune entre une unité de désembrouillage de signaux multimédias embrouillés avec un mot de contrôle et une unité cryptographique amovible propre à déchiffrer le mot de contrôle nécessaire au désembrouillage, dans lequel :

a) l'une des unités, dite première unité, tire ( 152, 164) un premier nombre aléatoire et l'envoie à l'autre unité,
b) l'autre unité, dite seconde unité, construit ( 160, 180) un terme $\alpha$ à partir duquel la première unité peut établir la clé de session $K_s$ selon la relation suivante :

$$K_s = \alpha^\beta \bmod n$$

où $\beta$ est un second nombre aléatoire tiré par la première unité et n est un nombre premier,
**caractérisé en ce que** :
c) la seconde unité envoie (166, 184) à la première unité un message contenant conjointement le premier nombre aléatoire reçu, le terme $\alpha$ et une signature du nombre aléatoire et/ou du terme $\alpha$ réalisée avec une clé privée $K_{3Pr}$ de la seconde unité, puis
d) la première unité vérifie (168, 192) la signature à l'aide d'une clé publique $K_{3pu}$ correspondant à la clé privée $K_{3pr}$ et compare (174, 198) le premier nombre aléatoire reçu à celui envoyé, et
e) si la signature est incorrecte ou si le premier nombre aléatoire reçu ne correspond pas à celui envoyé, alors la première unité ne procède pas aux étapes suivantes permettant d'établir la clé de session.

2. Procédé selon la revendication 1, **caractérisé en ce que** les étapes a) à e) sont réitérées une seconde fois en inversant les rôles des première et seconde unités.

3. Procédé selon l'une quelconque des revendications précédentes, **caractérisé en ce que** préalablement aux étapes a) à e), l'unité de désembrouillage et l'unité cryptographique amovible échangent mutuellement (112, 120, 128, 130) :

- une première clé publique $K_{1pu}$,
- un premier certificat ($C_{2T}$ et $C_{2C}$) contenant au moins une deuxième clé publique $K_{2pu}$, ce certificat étant signé à l'aide d'une première clé privée $K_{1pr}$ correspondant à la première clé publique $K_{1pu}$, et
- un second certificat ($C_{3T}$ et $C_{3C}$) contenant au moins une troisième clé publique $K_{3pu}$, ce certificat étant signé à l'aide d'une deuxième clé privée $K_{2pr}$ correspondant à la deuxième clé publique $K_{2pu}$, la troisième clé publique $K_{3pu}$ correspondant à la clé privée $K_{3pr}$ utilisée pour réaliser la signature lors de l'étape c), et **en ce que** l'unité de désembrouillage et l'unité cryptographique amovible vérifient (128, 130) chacune les premier et second certificats reçus et procèdent aux étapes a) à e) uniquement si l'unité de désembrouillage et l'unité cryptographique amovible ont pu vérifier avec succès l'authenticité des premier et second certificats reçus par chacune d'elle.

4. Procédé selon l'une quelconque des revendications précédentes, **caractérisé en ce qu'**au moins l'une des unités incrémente (242, 284) un premier compteur interne en fonction du nombre de messages envoyés vers et/ou reçus de l'autre unité et déclenche (2492, 296) automatiquement l'établissement d'une nouvelle clé de session si le premier compteur dépasse un premier seuil prédéterminé.

5. Procédé selon la revendication 4, **caractérisé en ce que** l'autre unité incrémente (256, 266) un second compteur interne en fonction du même nombre de messages et provoque (254, 2652) automatiquement l'arrêt du désembrouillage des signaux multimédias si le second compteur dépasse un second seuil prédéterminé supérieur au premier seuil.

6. Procédé selon l'une quelconque des revendications précédentes, **caractérisé en ce que** :

- chacune des unités incrémente (242, 256, 266, 284) un compteur interne en fonction du nombre de messages envoyés et/ou reçus,
- au moins l'une des unités ajoute (247, 271) à chaque message envoyé vers l'autre unité un code de redondance calculé en fonction du contenu du message à envoyer et de la valeur actuelle de son compteur interne, et
- l'autre unité vérifie (260, 288) l'exactitude du message reçu en comparant le code de redondance ajouté à un code de redondance calculé en fonction du contenu du message reçu et de la valeur actuelle de son propre compteur interne.

7. Unité (14, 16) adaptée pour être mise en oeuvre dans un procédé d'établissement d'une clé de session commune conforme à l'une quelconque des revendications précédentes, **caractérisée en ce que** cette unité comprend des moyens aptes à exécuter soit les étapes a), d) et e) soit les étapes b) et c) du procédé d'établissement d'une clé de session conforme aux revendications précédentes.

**8.** Unité (14, 16) selon la revendication 7, **caractérisée en ce que** l'unité comprend des moyens aptes à échanger avec l'autre unité la première clé publique, le premier et le second certificats et à vérifier les premier et second certificats reçus pour procéder soit aux étapes a), d) et

e) soit aux étapes b) et c) uniquement si l'authenticité des premier et second certificats reçus a pu être vérifiée avec succès.

**9.** Unité (14, 16) selon la revendication 7 ou 8, **caractérisée en ce que** l'unité comprend des moyens aptes soit à incrémenter un premier compteur interne (30) en fonction du nombre de messages envoyés vers et/ou reçus de l'autre unité et à déclencher l'établissement d'une nouvelle clé de session si le compteur dépasse un premier seuil prédéterminé ($S_1$) soit à incrémenter un second compteur interne (56) en fonction du même nombre de messages et à provoquer l'arrêt du désembrouillage des signaux multimédias si le second compteur dépasse un second seuil prédéterminé ($S_2$) supérieur au premier seuil.

**10.** Unité selon l'une quelconque des revendications 7 à 9, **caractérisée en ce que** l'unité comprend des moyens aptes:

- à incrémenter un compteur interne (30, 56) en fonction d'un nombre de messages envoyés vers et/ou reçus de l'autre unité et,
- soit à ajouter à chaque message envoyé vers l'autre unité un code de redondance calculé en fonction du contenu du message à envoyer et de la valeur actuelle de son compteur interne,
- soit à vérifier l'exactitude du message reçu en comparant le code de redondance ajouté à un code de redondance calculé en fonction du contenu du message reçu et de la valeur actuelle de son propre compteur interne.

**11.** Unité selon l'une quelconque des revendications 7 à 10, **caractérisée en ce que** l'unité est soit une unité (14) de désembrouillage d'un signal multimédia embrouillé avec un mot de contrôle soit une unité cryptographique amovible (16) propre à déchiffrer le mot de contrôle nécessaire au désembrouillage.

**Claims**

**1.** A process for establishing a common symmetrical session key $K_s$ between a unit for descrambling multimedia signals scrambled with a control word and a removable cryptographic unit suitable for deciphering the control word necessary for the descrambling, in which:

a) one of the units, designated first unit, obtains (152,164) a first random number and sends it to the other unit,
b) the other unit, designated second unit, constructs (160,180) a term $\forall$ from which the first unit can establish the session key $K_s$ according to the following equation:

$$K_s = \forall^\exists \bmod n$$

in which 3 is a second random number obtained by the first unit and n is a prime number,
**characterised in that**:
c) the second unit sends (166,184) to the first unit a message containing together the received random number, the term $\forall$ and a signature of the random number and/or of the term $\forall$ produced with a private key $K_{3pr}$ of the second unit, then
d) the first unit verifies (168,192) the signature by means of a public key $K_{3pu}$ corresponding to the private key $K_{3Pr}$ and compares (174,198) the received first random number to that sent, and
e) if the signature is incorrect or if the received first random number does not correspond to that sent, then the first unit does not proceed to subsequent steps enabling the session key to be established.

**2.** A process according to claim 1, **characterised in that** the steps a) to e) are repeated a second time by reversing the roles of the first and second unit.

**3.** A process according to either one of the preceding claims, **characterised in that** prior to the steps a) to e), the descrambling unit and the removable cryptographic unit mutually exchange (112,120,128,130):

- a first public key $K_{1pu}$,
- a first certificate ($C_{2T}$ and $C_{2C}$) containing at least one second public key $K_{2pu}$, this certificate being signed by means of a first private key $K_{1pr}$ corresponding to the first public key $K_{1pu}$, and
- a second certificate ($C_{3T}$ and $C_{3C}$) containing at least one third public key $K_{3pu}$, this certificate being signed by means of a second private key $K_{2pr}$ corresponding to the second public key $K_{2pu}$, the third public key $K_{3pu}$ corresponding to the private key $K_{3pr}$ used to produce the signature during step c),

and **in that** the descrambling unit and the removable cryptographic unit each verify (128,130) the first and second certificates received and proceed to the steps a) to e) only if the descrambling unit and the removable cryptographic unit have been able to verify successfully the authenticity of the first and second certificates received by each of them.

**4.** A process according to any one of the preceding claims, **characterised in that** at least one of the units (242,284) increments a first internal counter as a function of the number of messages sent to and/or received from the other unit and automatically triggers (2492,296) the establishment of a new session key if the first counter exceeds a first predetermined threshold.

**5.** A process according to claim 4, **characterised in that** the other unit increments (256,266) a second internal counter as a function of the same number of messages and automatically induces shutdown of the descrambling of the multimedia signals if the second counter exceeds a second predetermined threshold higher than the first threshold.

**6.** A process according to any one of the preceding claims, **characterised in that**:

- each of the units increments (242,256,266,284) an internal counter as a function of the number of messages sent and/or received,
- at least one of the units adds (247,271) to each message sent to the other unit a redundancy code calculated as a function of the content of the message to be sent and of the actual value of its internal counter, and
- the other unit verifies (260,288) the accuracy of the message received by comparing the redundancy code added to a redundancy code calculated as a function of the content of the message received and of the actual value of its own internal counter.

**7.** A unit (14,16) adapted to be utilised in a process for establishing a common session key according to any one the preceding claims, **characterised in that** this unit comprises means able to perform either steps a),d) and e) or steps b) and c) of the process for establishing a session key according to the preceding claims.

**8.** A unit (14,16) according to claim 7, **characterised in that** the unit comprises means able to exchange with the other unit the first public key, the first and second certificates and to verify the first and second certificates received so as to proceed either to steps a),d) and e) or steps b) and c) only if it has been possible to verify successfully the authenticity of the first and second certificates received.

**9.** A unit (14,16) according to claim 7 or 8, **characterised in that** the unit comprises means able either to increment a first internal counter (30) as a function of the number of messages sent to and/or received from the other unit and to trigger the establishing of a new session key if the counter exceeds a first predetermined threshold ($S_1$), or to increment a second internal counter (56) as a function of the same number of messages and to induce shutdown of the descrambling of the multimedia signals if the second counter exceeds a second predetermined threshold ($S_2$) higher than the first threshold.

**10.** A unit according to any one of claims 7 to 9, **characterised in that** the unit comprises means able:

- to increment an internal counter (30,56) as a function of the number of messages sent to and/or received from the other unit and,
- either to add to each message sent to the other unit a redundancy code calculated as a function of the content of the message to be sent and of the actual value of its internal counter,
- or to verify the accuracy of the message received by comparing the redundancy code added to a redundancy code calculated as a function of the content of the message received and of the actual value of its own internal counter.

**11.** A unit according to any one of claims 7 to 10, **characterised in that** the unit is either a unit (14) for descrambling a multimedia signal scrambled with a control word or a removable cryptographic unit (16) suitable for deciphering the control word necessary for the descrambling.

**Patentansprüche**

**1.** Verfahren zur Erstellung eines gemeinsamen symmetrischen Sitzungsschlüssels $K_S$ zwischen einer Einheit zum Entzerren vermischter multimedialer Signale mit einem Steuerwort und einer entfernbaren kryptographischen Einheit, die geeignet ist, das Steuerwort zu entschlüsseln, das zum Entzerren notwendig ist, wobei:

a) die eine der Einheiten, die erste Einheit, eine erste Zufallszahl zieht (152, 164) und sie an die andere Einheit sendet,
b) die andere Einheit, die zweite Einheit, einen Term $\alpha$ konstruiert (160, 180), anhand dessen die erste Einheit den Sitzungsschlüssel $K_S$ nach der folgenden Beziehung erstellen kann:

$$K_S = \alpha^\beta \bmod n$$

wobei $\beta$ eine zweite Zufallszahl ist, die von der ersten Einheit gezogen wird, und n eine Primzahl ist,
**dadurch gekennzeichnet, dass**:
c) die zweite Einheit an die erste Einheit eine Nachricht sendet (166, 184), die gleichzeitig die erste erhaltene Zufallszahl, den Term $\alpha$ und eine Signatur der Zufallszahl und/oder des Terms $\alpha$ enthält, die mit einem privaten Schlüssel $K_{3pr}$ der zweiten Einheit erzeugt wird, dann
d) die erste Einheit die Signatur mit Hilfe eines öffentlichen Schlüssels $K_{3pu}$ überprüft (168, 192), der dem privaten Schlüssel $K_{3pr}$, entspricht, und die erste erhaltene Zufallszahl mit der gesendeten vergleicht (174, 198), und
e) wenn die Signatur inkorrekt ist oder wenn die erste erhaltene Zufallszahl nicht der gesendeten entspricht, die erste Einheit dann die folgenden Schritte nicht ausführt, die es ermöglichen, den Sitzungsschlüssel zu erstellen.

**2.** Verfahren nach Anspruch 1,
**dadurch gekennzeichnet, dass**
die Schritte a) bis e) ein zweites Mal wiederholt werden, wobei die Rollen der ersten und zweiten Einheit vertauscht werden.

**3.** Verfahren nach einem der vorhergehenden Ansprüche, **dadurch gekennzeichnet, dass** die Einheit zum Entzerren und die entfernbare kryptographische Einheit vor den Schritten a) bis e) gegenseitig austauschen (112, 120, 128, 130):

- einen ersten öffentlichen Schlüssel $K_{1pu}$,
- ein erstes Zertifikat ($C_{2T}$ und $C_{2C}$), das mindestens einen zweiten öffentlichen Schlüssel $K_{2pu}$ enthält, wobei dieses Zertifikat mit Hilfe eines ersten privaten Schlüssels $K_{1pr}$ signiert wird, der dem ersten öffentlichen Schlüssel $K_{1pu}$ entspricht, und
- ein zweites Zertifikat ($C_{3T}$ und $C_{3C}$), das mindestens einen dritten öffentlichen Schlüssel $K_{3pu}$ enthält, wobei dieses Zertifikat mit Hilfe eines zweiten privaten Schlüssels $K_{2pr}$ signiert wird, der dem zweiten öffentlichen Schlüssel $K_{2pu}$, entspricht, wobei der dritte öffentliche Schlüssel $K_{3pu}$ dem privaten Schlüssel $K_{3pr}$, entspricht, der verwendet wird, um die Signatur in Schritt c) zu erzeugen,

und **dadurch**, dass die Einheit zum Entzerren und die entfernbare kryptographische Einheit beide das erste und zweite erhaltene Zertifikat überprüfen (128, 130) und die Schritte a) bis e) nur dann ausführen, wenn die Einheit zum Entzerren und die entfernbare kryptographische Einheit die Authentizität des ersten und zweiten Zertifikats, das beide erhalten haben, erfolgreich überprüfen konnten.

**4.** Verfahren nach einem der vorhergehenden Ansprüche,

**dadurch gekennzeichnet, dass**

mindestens eine der Einheiten einen ersten internen Zähler in Abhängigkeit von der Anzahl der an die andere Einheit gesendeten Nachrichten und/oder der von der anderen Einheit erhaltenen Nachrichten inkrementiert (242, 284) und automatisch die Erstellung eines neuen Sitzungsschlüssels auslöst (2492, 296), wenn der erste Zähler einen ersten, zuvor bestimmten Schwellenwert überschreitet.

5. Verfahren nach Anspruch 4,
**dadurch gekennzeichnet, dass**
die andere Einheit einen zweiten internen Zähler in Abhängigkeit von der gleichen Anzahl Nachrichten inkrementiert (256, 266) und automatisch die Beendigung des Entzerrens der multimedialen Signale veranlasst (254, 2652), wenn der zweite Zähler einen zweiten, zuvor bestimmten Schwellenwert überschreitet, der über dem ersten Schwellenwert liegt.

6. Verfahren nach einem der vorhergehenden Ansprüche,
**dadurch gekennzeichnet, dass**:

- jede der Einheiten einen internen Zähler in Abhängigkeit von der Anzahl der gesendeten und/oder erhaltenen Nachrichten inkrementiert (242, 256, 266, 284),
- mindestens eine der Einheiten jeder Nachricht, die an die andere Einheit gesendet wird, einen Redundanzcode hinzufügt (247, 271), der in Abhängigkeit von dem Inhalt der zu sendenden Nachricht und dem aktuellen Wert ihres internen Zählers berechnet wird, und
- die andere Einheit die Richtigkeit der erhaltenen Nachricht überprüft (260, 288), indem sie den hinzugefügten Redundanzcode mit einem Redundanzcode vergleicht, der in Abhängigkeit von dem Inhalt der erhaltenen Nachricht und dem aktuellen Wert ihres eigenen internen Zählers berechnet wird.

7. Einheit (14, 16), dafür angepasst, in einem Verfahren zur Erstellung eines gemeinsamen Sitzungsschlüssels nach einem der vorhergehenden Ansprüche verwendet zu werden,
**dadurch gekennzeichnet, dass**
diese Einheit Mittel umfasst, die geeignet sind, entweder die Schritte a), d) und e) oder die Schritte b) und c) des Verfahrens zur Erstellung eines Sitzungsschlüssels nach den vorhergehenden Ansprüchen auszuführen.

8. Einheit (14, 16) nach Anspruch 7,
**dadurch gekennzeichnet, dass**
die Einheit Mittel umfasst, die geeignet sind, mit der anderen Einheit den ersten öffentlichen Schlüssel, das erste und zweite Zertifikat auszutauschen und das erste und zweite erhaltene Zertifikat zu überprüfen, um entweder die Schritte a), d) und e) oder die Schritte b) und c) nur dann auszuführen, wenn die Authentizität des ersten und zweiten erhaltenen Zertifikats erfolgreich überprüft werden konnte.

9. Einheit (14, 16) nach Anspruch 7 oder 8,
**dadurch gekennzeichnet, dass**
die Einheit Mittel umfasst, die geeignet sind, entweder einen ersten internen Zähler (30) in Abhängigkeit von der Anzahl der an die andere Einheit gesendeten Nachrichten und/oder der von der anderen Einheit erhaltenen Nachrichten zu inkrementieren und die Erstellung eines neuen Sitzungsschlüssels auszulösen, wenn der Zähler einen ersten, zuvor bestimmten Schwellenwert ($S_1$) überschreitet, oder einen zweiten internen Zähler (56) in Abhängigkeit von der gleichen Anzahl Nachrichten zu inkrementieren und die Beendigung des Entzerrens der multimedialen Signale zu veranlassen, wenn der zweite Zähler einen zweiten, zuvor bestimmten Schwellenwert ($S_2$) überschreitet, der über dem ersten Schwellenwert liegt.

10. Einheit nach einem der Ansprüche 7 bis 9,
**dadurch gekennzeichnet, dass**
die Einheit Mittel umfasst, die geeignet sind:

- einen internen Zähler (30, 56) in Abhängigkeit von einer Anzahl an die andere Einheit gesendeter Nachrichten und/oder von der anderen Einheit erhaltener Nachrichten zu inkrementieren und
- entweder jeder Nachricht, die an die andere Einheit gesendet wird, einen Redundanzcode hinzuzufügen, der in Abhängigkeit von dem Inhalt der zu sendenden Nachricht und dem aktuellen Wert ihres internen Zählers berechnet wird,
- oder die Richtigkeit der erhaltenen Nachricht zu überprüfen, indem sie den hinzugefügten Redundanzcode mit einem Redundanzcode vergleichen, der in Abhängigkeit von dem Inhalt der erhaltenen Nachricht und dem aktuellen Wert ihres eigenen internen Zählers berechnet wird.

**11.** Einheit nach einem der Ansprüche 7 bis 10, **dadurch gekennzeichnet, dass** die Einheit entweder eine Einheit (14) zum Entzerren eines vermischten multimedialen Signals mit einem Steuerwort oder eine entfernbare kryptographische Einheit (16) ist, die geeignet ist, das Steuerwort zu entschlüsseln, das zum Entzerren notwendig ist.

*Fig.1*

2

EP 1 917 756 B1

Fig.2

*Fig.3A*

Fig.3B

EP 1 917 756 B1

Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 2841714

**Littérature non-brevet citée dans la description**

• **DOUGLAS STINSON.** Cryptographie Théorie et Pratique. International Thomson Publishing, 1996

• AUTHENTICATION AND AUTHENTICATED KEY EXCHANGES. **DIFFIE W. et al.** DESIGNS, CODES AND CRYPTOGRAPHY. KLUWER ACADEMIC PUBLISHERS, 1992, vol. 2, 107-125
• **BRUCE SCHNEIER.** Cryptographie Appliquée. WILEY